# EUROPÄISCHE PATENTSCHRIFT

(11) **EP 4 101 706 B1**
(45) Veröffentlichungstag und Bekanntmachung des Hinweises auf die Patenterteilung: **02.10.2024**
(21) Anmeldenummer: 22175505.1
(22) Anmeldetag: 25.05.2022
(51) Int. Cl.: B60S 9/08, B60D 1/66

(54) **STÜTZWINDENANTRIEB FÜR EINEN FAHRZEUGANHÄNGER, ANHÄNGERABSTÜTZUNG FÜR EINEN FAHRZEUGANHÄNGER UND FAHRZEUGANHÄNGER**
SUPPORTING LEG DRIVE FOR A VEHICLE TRAILER, TRAILER SUPPORT FOR A VEHICLE TRAILER AND VEHICLE TRAILER
ENTRAÎNEMENT DE PIED D'APPUI POUR UNE REMORQUE DE VÉHICULE, SUPPORT DE REMORQUE POUR UNE REMORQUE DE VÉHICULE ET REMORQUE DE VÉHICULE

(30) Priorität: 11.06.2021 DE 102021115130
(43) Veröffentlichungstag der Anmeldung: 14.12.2022
(73) Patentinhaber: Dolina, Dieter, 94032 Passau (DE); Wittmann, Guido, 94032 Passau (DE)
(72) Erfinder: Dolina, Dieter, 94032 Passau (DE); Wittmann, Guido, 94032 Passau (DE)
(74) Vertreter: Seemann & Partner Patentanwälte mbB

(56) Entgegenhaltungen:
- DE-A1- 102017 128 586
- DE-U1- 20 022 921
- DE-U1- 202014 105 297
- US-A1- 2004 080 125
- US-A1- 2015 224 838

## Beschreibung

Dieter Dolina und Guido Wittmann, Höllgasse 7a, 94032 Passau Stützwindenantrieb für einen Fahrzeuganhänger, Anhängerabstützung für einen Fahrzeuganhänger und Fahrzeuganhänger

### Beschreibung

Die Erfindung betrifft einen Stützwindenantrieb für einen Fahrzeuganhänger.

Zudem betrifft die Erfindung eine Anhängerabstützung für einen Fahrzeuganhänger und einen Fahrzeuganhänger. Für gewöhnlich weisen Fahrzeuganhänger, beispielsweise Sattelauflieger für einen Sattelzug oder ein-, zwei- oder dreiachsiger Anhänger, eine Anhängerabstützung mit ein oder zwei Stützen auf, mit denen sich der Anhänger gegen den Boden abstützen lässt, wenn er von einem Zugfahrzeug gelöst werden soll.

Vielfach weist die Anhängerabstützung eine manuell betriebene Kurbel auf, mit der die Stützen verfahren werden können. Dies erfordert allerdings viel Kraft und einen großen Zeitaufwand.

Aus diesem Grund sind aus dem Stand der Technik elektrisch angetriebene Stützwindenantriebe bekannt, beispielsweise der EP 1 159 171 B1, die in den Fahrzeuganhänger eingebaut sind oder angebaut werden und das Aus- und Einfahren der Stützen erleichtern.

Nachteilhaft lassen sich jedoch bei einem Ausfall des elektrischen Antriebs die Stützen nicht mehr betätigen. In EP 0 529 544 B1 ist es daher vorgesehen einen motorischen Antrieb unter Beibehaltung einer Kurbel mit einem Zusatzeingang des Kurbeltriebs zu verbinden, um eine Ausfallsicherung zu erhalten.

DE 20 2014 105 297 U1 zeigt eine Stütze mit ausfahrbarer Stützplatte oder Stützrad für ein Kraftfahrzeug oder einen Anhänger. Die Stütze lässt sich zwischen einem Handantrieb und einem Motorantrieb umstellen, indem eine mit einem Motor in Wirkverbindung stehende Getriebenuss heruntergedrückt wird, so dass sie nicht mehr einen Getriebemehrkant einer Spindel der Stütze umfasst.

Die Aufgabe der Erfindung besteht darin, einen Stützwindenantrieb für einen Fahrzeuganhänger, eine Anhängerabstützung für einen Fahrzeuganhänger, einen Fahrzeuganhänger und ein Verfahren zum Nachrüsten eines Stützwindenantriebs an einen Fahrzeuganhänger anzugeben, die eine hohe Zuverlässigkeit sowie eine einfache Bedienbarkeit und Handhabbarkeit erreichen.

Diese Aufgabe wird gelöst durch einen Stützwindenantrieb für einen Fahrzeuganhänger, wobei der Stützwindenantrieb einen Wellenaufsatz, einen Elektromotor und ein Getriebe umfasst, wobei der Wellenaufsatz dazu ausgebildet ist, drehgesichert auf eine Stützwindenwelle des Fahrzeuganhängers aufgesetzt zu werden, wobei das Getriebe ein Drehmoment des Elektromotors aufnimmt und durch eine mechanische Verbindung auf den Wellenaufsatz überträgt, wobei die mechanische Verbindung zwischen dem Getriebe und dem Wellenaufsatz durch ein Kopplungselement bereitgestellt wird, wobei das Kopplungselement auf dem Wellenaufsatz angeordnet und derart ausgestaltet ist, dass durch Aufstecken einer Kurbel auf ein äußeres Ende des Wellenaufsatzes die mechanische Verbindung zwischen dem Getriebe und dem Wellenaufsatz unterbrochen wird, wobei das Kopplungselement eine in radialer Richtung elastisch auslenkbare Passfeder ist, die auf dem Wellenaufsatz angeordnet ist, wobei die Passfeder durch das Aufstecken der Kurbel auf den Wellenaufsatz in radialer Richtung nach innen bewegt wird, so dass die Passfeder aus einer Nut einer Getriebenabe des Getriebes herausbewegt wird.

Mit dem erfindungsgemäßen Stützwindenantrieb lässt sich die Stützwindenwelle sowohl elektrisch als auch manuell betreiben. Vorteilhaft ermöglicht der Stützwindenantrieb einen leichten Wechsel zwischen dem elektrischen Betrieb und dem manuellen Betrieb, beispielsweise bei einem Ausfall des Elektromotors. Durch das Aufsetzen der Kurbel wird die durch das Kopplungselement gebildete mechanische Verbindung zwischen Getriebe und Wellenaufsatz gelöst, so dass die Selbsthemmung des Schneckengetriebes aufgehoben wird. Auf diese Weise lässt sich mittels der Kurbel die Stützwindenwelle und damit die Stütze manuell antreiben, ohne dass das Getriebe die Betätigung der Kurbel erschwert. Die Kurbel wird zudem an derselben Seite angesetzt, an der auch der Stützwindenantrieb angeordnet ist. Beim Wechsel zwischen elektrischem Betrieb zum manuellen Betrieb muss der Fahrer somit nicht die Fahrzeugseite wechseln.

Der Fahrzeuganhänger ist insbesondere ein Sattelauflieger oder ein ein-, zwei- oder dreiachsiger Anhänger, der eine Abstützung in Form von Stützen benötigt. Beim Anbau des Stützwindenantriebs wird insbesondere zunächst eine eventuell vorhandene Kurbel von der Stützwindenwelle abgenommen, bevor der Stützwindenantrieb über die Stützwindenwelle montiert wird. Insbesondere umfasst der Stützwindenantrieb eine Kurbel, die dazu ausgestaltet ist, auf das äußere Ende des Wellenaufsatzes aufgesetzt zu werden und die Stützwinde manuell anzutreiben.

Das Getriebe ist insbesondere ein Schneckengetriebe. Insbesondere reduziert das Schneckengetriebe die Drehzahl und erhöht das Drehmoment des Elektromotors. Insbesondere überträgt das Getriebe sein Drehmoment auf den Wellenaufsatz. Der Wellenaufsatz ist insbesondere mittels eines Passstifts gegenüber der Stützwindenwelle drehgesichert. Der Begriff drehgesichert ist im Zusammenhang der Beschreibung so zu verstehen, dass sich der Wellenaufsatz durch die Drehsicherung zusammen mit der Stützwindenwelle dreht. Das äußere Ende des Wellenaufsatzes ist das Ende, das vom Fahrzeuganhänger abgewandt ist, wenn der Stützwindenantrieb am Fahrzeuganhänger fixiert und der Wellenaufsatz auf die Stützwindenwelle aufgesetzt ist.

Der Wellenaufsatz verbindet den Stützwindenantrieb mit der Stützwindenwelle und ermöglicht so, dass das Drehmoment des Elektromotors auf die Stützwindenwelle übertragen wird. Durch Aufsetzen des Wellenaufsatzes auf die Stützwindenwelle wird die Stützwindenwelle in längsaxialer Richtung verlängert. Auf diese Weise wird ermöglicht, die Stützwindenwelle mit dem Getriebe zu koppeln und gleichzeitig eine Kurbel auf das äußere Ende aufzusetzen. Der Wellenaufsatz hat insbesondere einen zylinderförmigen ersten Abschnitt und einen daran angrenzenden zweiten Abschnitt in Form eines Hohlzylinders, wobei der Umfang des zweiten Abschnitts größer als der Umfang des ersten Abschnitts ist. Der zweite Abschnitt ist insbesondere zur Aufnahme der Stützwindenwelle und der erste Abschnitt zur Aufnahme des Kopplungselements ausgestaltet.

Das Kopplungselement ist eine in radialer Richtung elastisch auslenkbare Passfeder, die auf dem Wellenaufsatz angeordnet ist, wobei die Passfeder durch das Aufstecken der Kurbel auf den Wellenaufsatz in radialer Richtung nach innen bewegt wird, so dass die Passfeder aus einer Nut einer Getriebenabe des Getriebes herausbewegt wird.

Die Ausbildung des Kopplungselements als Passfeder ist eine besonders effektive und einfache Möglichkeit, um das Getriebe lösbar mit dem Wellenaufsatz zu koppeln. Die Passfeder steht in radialer Richtung aus dem Wellenaufsatz vor und liegt in der Nut der Getriebenabe, so dass das Drehmoment des Getriebes auf den Wellenaufsatz übertragen wird. Durch Aufstecken der Kurbel wird die Passfeder in radialer Richtung nach innen gedrückt, so dass die Passfeder die Nut der Getriebenabe verlässt und die mechanische Verbindung gelöst wird.

Insbesondere ist die Passfeder durch wenigstens ein Federelement in radialer Richtung mit dem Wellenaufsatz verbunden, die die elastische Auslenkbarkeit der Passfeder bereitstellen. Die Passfeder erstreckt sich insbesondere längsaxial zur Stützwindenwelle, wenn der Wellenaufsatz auf die Stützwindenwelle aufgesetzt ist. In Umfangsrichtung ist die Passfeder insbesondere durch Formschluss mit dem Wellenaufsatz gekoppelt, wobei die Passfeder insbesondere zur Herstellung des Formschlusses in einer Nut des Wellenaufsatzes angeordnet ist.

Die Begriffe radial bzw. in radialer Richtung, längsaxial bzw. in längsaxialer Richtung sowie in Umfangsrichtung beziehen sich jeweils auf das Bezugssystem des Wellenaufsatzes. Wenn der Wellenaufsatz auf die Stützwindenwelle aufgesetzt ist, beziehen sich diese Richtungen damit auch auf das Bezugssystem der Stützwindenwelle.

Die Passfeder ist bevorzugt an ihrem äußeren Ende rampenförmig ausgebildet.

Beim Aufstecken der Kurbel bewegt sich die Kurbel entlang dem rampenförmigen äußeren Ende der Passfeder und drückt diese auf diese Weise nach innen. An das rampenförmige äußere Ende der Passfeder schließt sich insbesondere ein gerader Abschnitt an. Dieser gerade Abschnitt sorgt dafür, dass die Passfeder gleichmäßig nach innen gepresst wird, wenn die Kurbel aufgesteckt wird.

Vorzugsweise ist die Passfeder zweiteilig ausgebildet, wobei ein erstes Bauteil in radialer Richtung auf einem zweiten Bauteil fixiert ist, wobei insbesondere das äußere Ende des ersten Bauteils rampenförmig ausgebildet ist, wobei insbesondere das zweite Bauteil eine größere Längserstreckung aufweist als das erste Bauteil.

Die zweiteilige Ausbildung der Passfeder erlaubt eine leichte Montage der Passfeder auf dem Wellenaufsatz. Das erste Bauteil umfasst insbesondere das rampenförmige Ende und steht in Kontakt mit der Kurbel, wenn die Kurbel aufgesteckt ist. Das zweite Bauteil ist insbesondere in einer Nut des Wellenaufsatzes angeordnet. Die Nut des Wellenaufsatzes fasst die Passfeder in Umfangsrichtung ein. Das äu-ßere Ende der Passfeder ist das Ende, das vom Fahrzeuganhänger abgewandt ist, wenn der Stützwindenantrieb am Fahrzeuganhänger fixiert und der Wellenaufsatz auf die Stützwindenwelle aufgesetzt ist.

Bevorzugt sind der Elektromotor und das Getriebe, und insbesondere der Wellenaufsatz, in einem gemeinsamen Gehäuse angeordnet.

Das Gehäuse ist dazu ausgestaltet, die Bauteile des Stützwindenantriebs vor Betriebseinflüssen zu schützen, z.B. vor Nässe und Steinschlag. Durch die Anordnung des Elektromotors, des Getriebes und insbesondere des Wellenaufsatzes in einem gemeinsamen Gehäuse wird der Stützwindenantrieb als Kompakt-Stützwindenantrieb ausgebildet, der auf einfache Weise an einem Fahrzeuganhänger nachgerüstet werden kann. Insbesondere ist das Gehäuse dazu ausgestaltet, mittels Schrauben oder ähnlichen Fixierungsmitteln am Fahrzeuganhänger gemeinsam mit einer Verschraubung der Stütze oder mit zusätzlichen Bohrungen an einem Fahrzeugrahmen des Fahrzeuganhängers fixiert zu werden. Es werden somit die vorhandenen Bohrungen am Fahrzeuganhänger genutzt, weitere Bohrungen am Fahrzeuganhänger sind nicht notwendig.

In dem Gehäuse ist bevorzugt ein Akkumulator angeordnet, der dazu ausgebildet ist, den Elektromotor mit elektrischem Strom zu versorgen.

Durch den Akkumulator ist es möglich, den Stützwindenantrieb elektrisch zu betätigen, ohne dass der Fahrzeuganhänger zur Stromversorgung an eine Zugmaschine angeschlossen ist. Insbesondere ist der Akkumulator dazu ausgebildet, durch einen elektrischen Anschluss des Fahrzeuganhängers mit elektrischem Strom versorgt zu werden. Insbesondere ist eine Auflagefläche zwischen dem Akkumulator und wenigstens einem Akkumulatorhalter mit einem bis -40°C frostsicheren, schwingungsdämpfenden Band ausgekleidet. Das frostsichere, schwingungsdämpfende Band schützt den Akkumulator auch bei kalten Temperaturen vor Vibrationen, was zu einer Verlängerung der Lebensdauer des Akkumulators beiträgt.

Vorzugsweise umfasst der Stützwindenantrieb einen mit dem Gehäuse verbundenen Halter, der in längsaxialer Richtung von dem Gehäuse absteht und dazu ausgebildet ist, an dem Fahrzeuganhänger gemeinsam mit der Stützwinde oder mit zusätzlichen Bohrungen am Fahrzeugrahmen des Fahrzeuganhängers fixiert zu werden.

Insbesondere weist der Stützwindenantrieb zwei Halter aus, die jeweils mehrere Bohrungen umfassen, mit denen die Halter mittels Fixierungsmitteln an dem Fahrzeuganhänger fixierbar sind.

Der Stützwindenantrieb umfasst bevorzugt eine Grundplatte, die zwischen dem Elektromotor und dem Getriebe angeordnet ist und an dessen Unterseite der Elektromotor und an dessen Oberseite das Getriebe fixiert sind, wobei insbesondere zwischen dem Elektromotor und dem Getriebe ein Zentrierring angeordnet ist, wobei insbesondere der Akkumulator an der Grundplatte oder an einem Elektroeinschub fixiert ist.

Die Grundplatte ist, insbesondere zusammen mit den zwei Haltern, ein tragendes Bauteil des Stützwindenantriebs. Der Zentrierring gewährleistet die Zentrierung zwischen Elektromotor und dem Getriebe, da bedingt durch die Grundplatte der Elektromotor und das Getriebe nicht direkt aufeinander aufgesetzt sind.

Vorzugsweise umfasst der Stützwindenantrieb wenigstens vier Relais, wenigstens einen Schalter und einen elektrischen Anschluss, die auf einem gemeinsamen Elektroeinschub angeordnet sind.

Die wenigstens vier Relais, der wenigstens eine Schalter und der elektrische Anschluss werden insbesondere außerhalb des Gehäuses auf dem Elektroeinschub montiert, sodass nur wenige Litzen im Gehäuse angeschlossen werden müssen. Durch Drehen des Schalters nach oben oder unten werden vom Elektromotor die Stützen entsprechend nach oben oder unten bewegt. Der elektrische Anschluss ist dazu ausgestaltet, den Akkumulator mit dem Fahrzeuganhänger elektrisch zu verbinden. Kommt es zu einer elektrischen Verbindung zwischen Anhänger und Zugmaschine, so wird der Akkumulator aufgeladen.

Bevorzugt ist an dem Gehäuse, insbesondere an einer Rückseite des Gehäuses, des Stützwindenantriebs ein erster Unterbrecher mit einem ersten Zapfen derart angeordnet, dass der erste Zapfen beim Einfahren einer Stütze durch eine Fußplatte der Stütze eingedrückt wird, wenn der Stützwindenantrieb an der Stütze fixiert ist und die Fußplatte einen oberen Haltepunkt erreicht hat, wobei der erste Unterbrecher dazu ausgebildet ist, eine Stromversorgung des Elektromotors zu unterbrechen, wenn der erste Zapfen eingedrückt ist.

Durch den ersten Unterbrecher wird sichergestellt, dass die Aufwärtsbewegung der Stütze beim elektrischen Betrieb angehalten wird, wenn die Fußplatte der Stütze den oberen Haltepunkt erreicht.

Die Aufgabe wird zudem gelöst durch eine Anhängerabstützung für einen Fahrzeuganhänger, umfassend wenigstens eine Stützwindenwelle, wenigstens eine Stütze und einen Stützwindenantrieb gemäß einer der zuvor beschriebenen Ausführungsformen.

Die Anhängerabstützung verkörpert die gleichen Vorteile, Merkmale und Eigenschaften wie der zuvor beschriebene Stützwindenantrieb.

Bevorzugt umfasst die Anhängerabstützung einen zweiten Unterbrecher mit einem zweiten Zapfen, wobei der zweite Unterbrecher an einer Fußplatte der Stütze fixiert ist, so dass der zweite Zapfen eingedrückt wird, wenn die Unterseite der Fußplatte auf einem Untergrund aufliegt, wobei der zweite Unterbrecher dazu ausgebildet ist, eine Stromversorgung des Elektromotors zu unterbrechen, wenn der zweite Zapfen eingedrückt ist, wobei insbesondere an einem Gehäuse des Stützwindenantriebs ein Betätigungselement, insbesondere ein Taster, angeordnet ist, wobei das Betätigungselement während es betätigt wird die Stromversorgung des Elektromotors trotz eingedrücktem zweiten Zapfen wiederherstellt.

Durch den zweiten Unterbrecher wird sichergestellt, dass der elektrische Antrieb abgestellt wird, wenn die Stützen auf den Boden aufkommen. Um die Stützen weiter auszufahren, beispielsweise um den Fahrzeuganhänger von einem Zugfahrzeug zu lösen, kann der Taster manuell betätigt werden, um den zweiten Unterbrecher zu überbrücken.

Die Aufgabe wird zudem gelöst durch einen Fahrzeuganhänger, umfassend eine Anhängerabstützung nach einer der zuvor beschriebenen Ausführungsformen.

Der Fahrzeuganhänger verkörpert die gleichen Vorteile, Merkmale und Eigenschaften wie die zuvor beschriebene Anhängerabstützung und der zuvor beschriebene Stützwindenantrieb.

Bevorzugt umfasst der Fahrzeuganhänger einen dritten Unterbrecher mit einem dritten Zapfen, wobei der dritte Unterbrecher in Fahrtrichtung des Fahrzeuganhängers vor einem Königszapfen des Fahrzeuganhängers fixiert ist, so dass der dritte Zapfen eingedrückt ist, solange der Königszapfen in einer Kupplung einer Sattelplatte einer Zugmaschine eingekuppelt ist, wobei der dritte Unterbrecher dazu ausgebildet ist, eine Stromversorgung des Elektromotors zu unterbrechen, wenn der dritte Zapfen nicht eingedrückt ist.

Der dritte Unterbrecher ist insbesondere eine Alternative zum zweiten Unterbrecher. Der dritte Zapfen wird durch die Sattelplatte der Zugmaschine eingedrückt. Durch den dritten Unterbrecher wird die Stromversorgung des Elektromotors genau dann unterbrochen, wenn die Stützen soweit ausgefahren sind, dass sich der Fahrzeuganhänger von der Sattelplatte abhebt, so dass der dritte Zapfen durch die Sattelplatte nicht länger eingedrückt wird.

Ein nicht beanspruchtes Verfahren zum Nachrüsten eines Stützwindenantriebs, insbesondere eines Stützwindenantriebs nach einem der zuvor beschriebenen Ausführungsformen, an einen Fahrzeuganhänger umfassend die folgenden Verfahrensschritte:
- Aufsetzen eines Wellenaufsatzes auf eine Stützwindenwelle des Fahrzeuganhängers,
- Sichern des Wellenaufsatzes gegen eine Verdrehung gegenüber der Stützwindenwelle, insbesondere mittels eines Passstifts oder einer Verschraubung,
- Schieben eines Gehäuses des Stützwindenantriebs über die Stützwindenwelle, wobei das Gehäuse einen Elektromotor und ein Getriebe umfasst,
- Fixieren des Gehäuses an einer Seite des Fahrzeuganhängers.

Das Verfahren zum Nachrüsten eines Stützwindenantriebs verkörpert die gleichen Vorteile, Merkmale und Eigenschaften wie der zuvor beschriebene Fahrzeuganhänger, die zuvor beschriebene Anhängerabstützung und der zuvor beschriebene Stützwindenantrieb.

Gemäß einer Ausführungsform wird der Wellenaufsatz zuerst auf der Stützwindenwelle aufgesetzt und gesichert, bevor das Gehäuse über den Wellenaufsatz geschoben wird. Gemäß einer alternativen Ausführungsform wird der Wellenaufsatz zusammen mit dem Gehäuse auf die Stützwindenwelle aufgesetzt. Sofern bereits eine Kurbel auf der Stützwindenwelle aufgesetzt ist, wird diese vor dem Aufsetzen des Wellenaufsatzes abmontiert. Der Wellenaufsatz wird insbesondere mittels desselben Passstifts oder derselben Verschraubung gegenüber der Stützwindenwelle gesichert, mit dem zuvor die Kurbel an der Stützwindenwelle fixiert war.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematisch vereinfachte Darstellung eines Fahrzeuganhängers mit einer Anhängerabstützung,
- Fig. 2: eine schematisch vereinfachte Schnittdarstellung eines Stützwindenantriebs,
- Fig. 3: eine schematisch vereinfachte Rückansicht eines Stützwindenantriebs,
- Fig. 4: eine schematisch vereinfachte perspektivische, teiltransparente Darstellung eines Stützwindenantriebs,
- Fig. 5: eine schematisch vereinfachte Schnittdarstellung eines Stützwindenantriebs mit Kurbel, Wellenaufsatz und Getriebe,
- Fig. 6: eine vergrößerte Darstellung eines Ausschnitts von Fig. 5,
- Fig. 7: eine schematisch vereinfachte Schnittdarstellung eines Stützwindenantriebs mit angesetzter Kurbel, Wellenaufsatz und Getriebe,
- Fig. 8: eine vergrößerte Darstellung eines Ausschnitts von Fig. 7,
- Fig. 9: eine schematisch vereinfachte perspektivische Darstellung eines Wellenaufsatzes mit einer Passfeder,
- Fig. 10: eine schematisch vereinfachte Darstellung eines an einer Fußplatte einer Stütze angeordneten Unterbrechers,
- Fig. 11: eine schematisch vereinfachte Darstellung eines in Fahrtrichtung vor einem Königszapfen angeordneten Unterbrechers.

In den Zeichnungen sind jeweils gleiche oder gleichartige Elemente und/oder Teile mit denselben Bezugsziffern versehen, so dass von einer erneuten Vorstellung jeweils abgesehen wird.

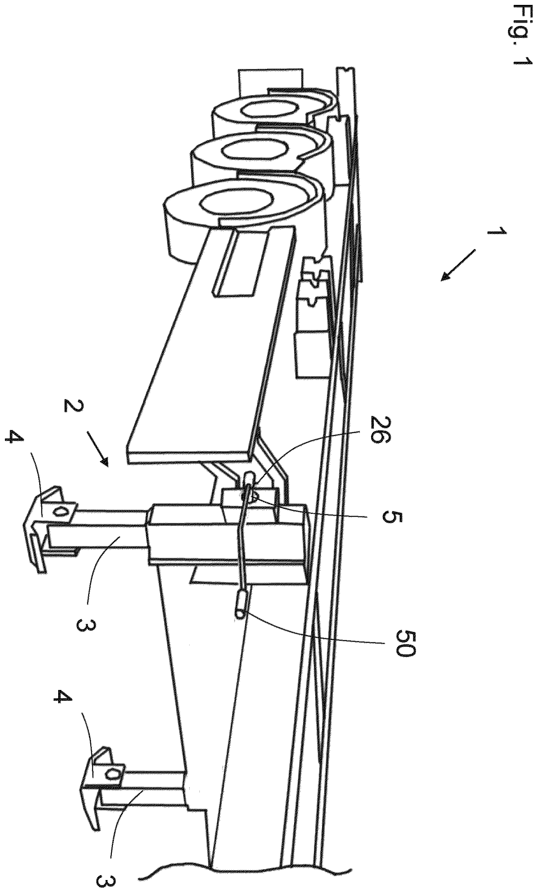

Fig. 1 zeigt schematisch vereinfacht einen Fahrzeuganhänger 1 in perspektivischer Darstellung. Der Fahrzeuganhänger 1 umfasst eine Anhängerabstützung 2 mit zwei Stützen 3, die den Fahrzeuganhänger 1 mittels Fußplatten 4 abstützen, wenn der Fahrzeuganhänger 1 nicht auf einem Zugfahrzeug aufliegt. Die Stützen 3 sind mittels einer Stützwindenwelle 5 verbunden. Durch Rotation der Stützwindenwelle 5 lassen sich die Stützen 3 hoch- und runterfahren. Hierzu umfasst der in Fig. 1 gezeigte Fahrzeuganhänger 1 eine Kurbel 50, die mittels eines Passstifts 26 oder einer Verschraubung an der Stützwindenwelle 5 fixiert ist und ein manuelles Verfahren der Stützen 3 erlaubt.

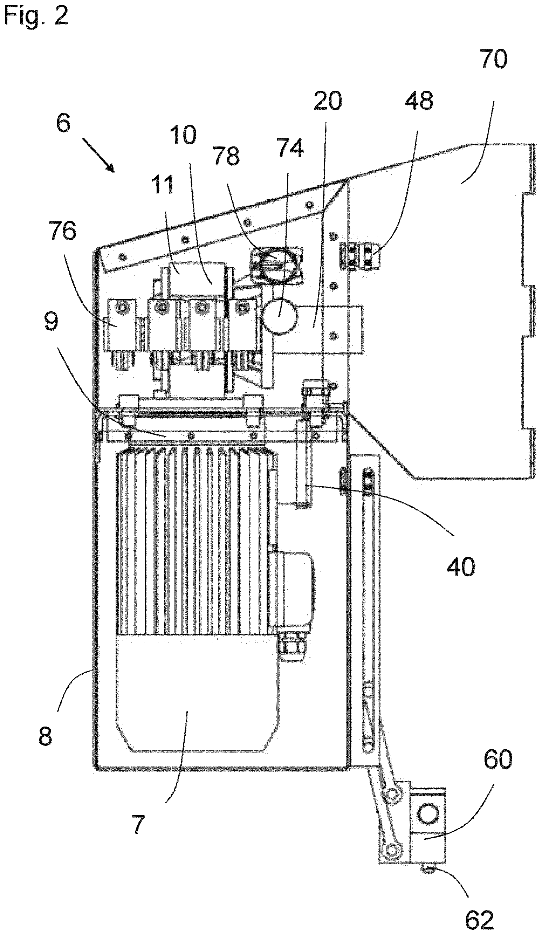

In Fig. 2 ist ein Stützwindenantrieb 6 schematisch vereinfacht in einer Querschnittsansicht dargestellt, mit dem die Stützen 3 durch elektrischen Antrieb der Stützwindenwelle 5 auch elektrisch verfahren werden können. Ein Gehäuse 8 schützt den Stützwindenantrieb 6 vor Betriebseinflüssen wie Feuchtigkeit und Steinschlägen. Der Stützwindenantrieb 6 ist mittels zweier Halter 70, von denen in Fig. 2 nur einer sichtbar ist, an einem Fahrzeuganhänger 1 fixierbar. Als Antrieb umfasst der Stützwindenantrieb 6 einen Elektromotor 7, dessen Drehmoment auf ein als Schneckengetriebe 11 ausgebildetes Getriebe 10 übertragen wird. Das Schneckengetriebe 11 hat ein hohes Übersetzungsverhältnis, so dass die Drehzahl es reduziert, beispielsweise auf ein Vierzehntel, und das Drehmoment erhöht wird, beispielsweise auf ein Vierzehnfaches. Das Drehmoment wird vom Schneckengetriebe 11 über einen Wellenaufsatz 20 auf die in Fig. 2 nicht dargestellte Stützwindenwelle 5 übertragen. Ein Akkumulator 40 versorgt den Elektromotor 7 mit elektrischer Energie, so dass der Stützwindenantrieb 6 auch dann elektrisch betrieben werden kann, wenn er nicht an ein Zugfahrzeug angeschlossen ist. Über einen elektrischen Anschluss 48 wird der Akkumulator 40 zum Aufladen mit elektrischer Energie vom Fahrzeuganhänger 1 gespeist. Durch ein oder mehrere Relais 76 und Schalter 78 lässt sich die Antriebsrichtung steuern, um die Stützen 3 hoch- und runterzufahren. Der Elektromotor 7, das Getriebe 10 und der Akkumulator 30 sind auf einer gemeinsamen Grundplatte 9 angeordnet, die ein tragendes Bauteil des Stützwindenantriebs 6 ist. Die Relais 76, der Schalter 78 und der Anschluss 48 sind zum vereinfachten Zusammenbau auf einer gemeinsamen Blechkonsole, einem sogenannten Elektroeinschub, vormontiert. Durch die Anordnung der in Fig. 2 gezeigten Komponenten des Stützwindenantriebs 6 in oder am Gehäuse 8 wird ein nachrüstbarer Kompakt-Stützwindenantrieb bereitgestellt.

Ein erster Unterbrecher 60 mit einem ersten Zapfen 62 ist derart am Stützwindenantrieb 6 montiert, dass die Fußplatte 4 der Stütze 3 den ersten Zapfen 62 eindrückt, wenn sie einen oberen Haltepunkt erreicht hat. In diesem Fall unterbricht der erste Unterbrecher 60 die Stromzufuhr zum Elektromotor 7, um ein weiteres Anheben der Stütze 3 zu verhindern.

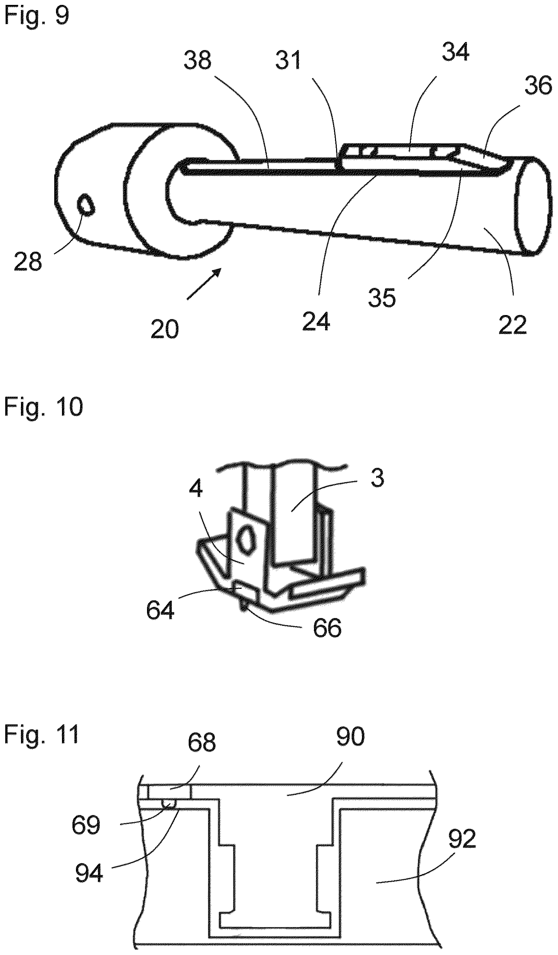

In Fig. 10 ist ein zweiter Unterbrecher 64 mit einem zweiten Zapfen 66 gezeigt, der an der Fußplatte 4 angeordnet ist und die Stromzufuhr zum Elektromotor 7 unterbricht, wenn die Fußplatte 4 den Untergrund berührt. Um die Stützen noch weiter anzuheben kann der zweite Unterbrecher 66 mittels einem am Gehäuse 8 angeordneten Taster 74 überbrückt werden, beispielsweise um den Fahrzeuganhänger 1 so weit anzuheben, dass der Fahrzeuganhänger 1 von einem Zugfahrzeug gelöst werden kann. Alternativ ist ein dritter Unterbrecher 68 mit einem dritten Zapfen 69 in Fahrtrichtung des Fahrzeuganhängers 1 bzw. der Zugmaschine vor einem Königszapfen 90 des Fahrzeuganhängers 1 angeordnet, wie in Fig. 11 schematisch gezeigt. Der dritte Zapfen 69 ist durch eine Sattelplatte 94 der Zugmaschine eingedrückt, solange der Königszapfen 90 in einer Kupplung 92 einer Sattelplatte des Zugfahrzeugs eingesteckt ist. Wird der Fahrzeuganhänger 1 durch Ausfahren der Stützen 3 so weit angehoben, dass der dritte Zapfen 69 von der Sattelplatte 94 nicht länger eingedrückt ist, so wird die Stromzufuhr zum Elektromotor 7 unterbrochen und das Anheben des Fahrzeuganhängers 1 gestoppt. Die alternative Variante unter Verwendung des dritten Unterbrechers 68 ist vor allem für neue Fahrzeuganhänger 1 sinnvoll, da eine Nachrüstung sehr aufwendig ist.

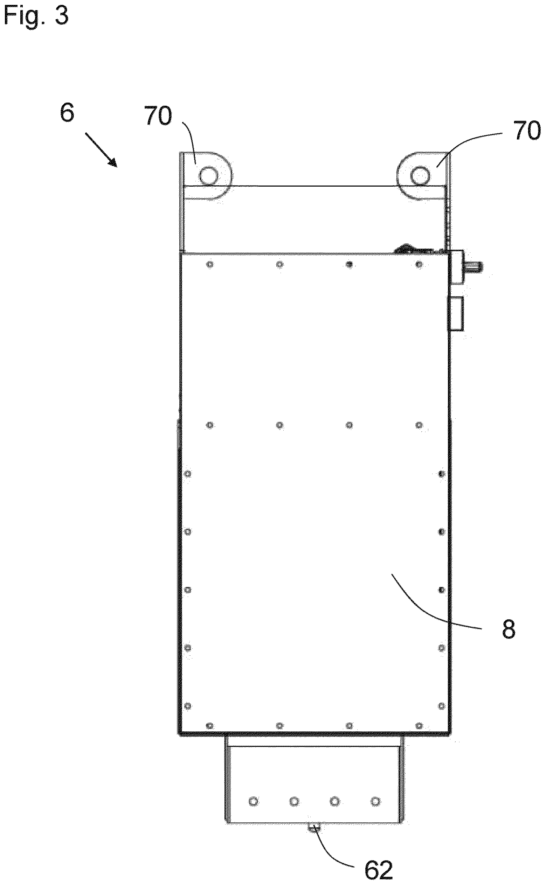

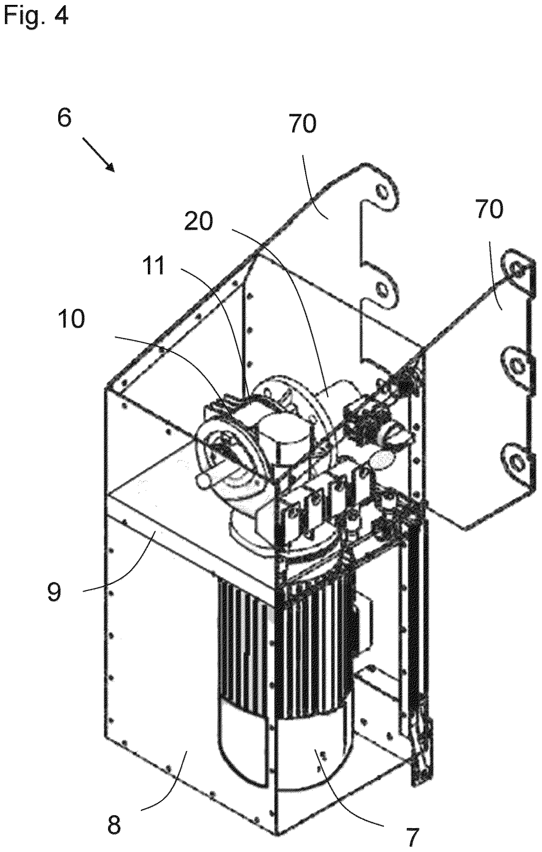

In Fig. 3 und 4 ist der Stützwindenantrieb 6 in zusätzlichen Ansichten gezeigt. Fig. 3 zeigt die Rückseite des Stützwindenantriebs 6 mit den zwei Haltern 70 zum Fixieren am Fahrzeuganhänger 1. Die flügelartige Form der Halter 70 ist in der perspektivischen Darstellung in Fig. 4 sichtbar. Auch die Grundplatte 9, die auf der Unterseite den Elektromotor 7 und auf der Oberseite das Getriebe 10 aufweist, ist in Fig. 4 dargestellt.

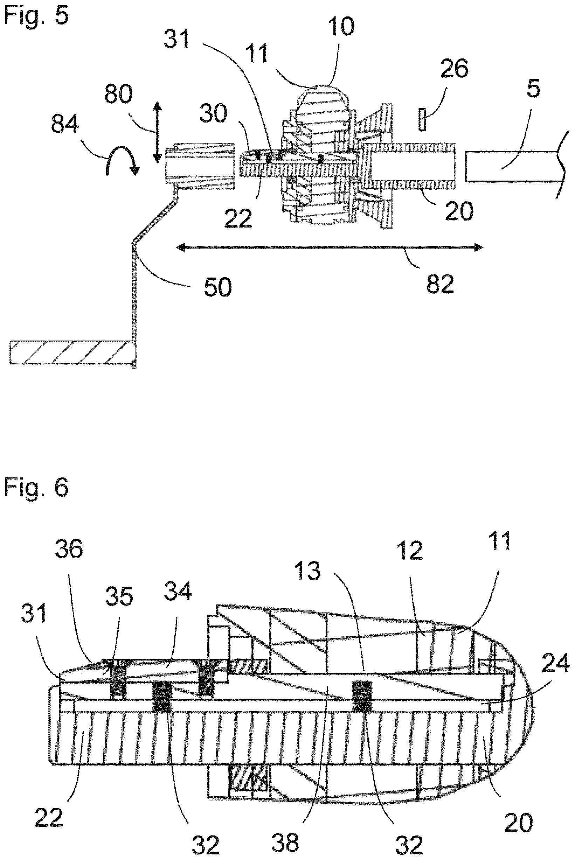

Fig. 5 zeigt eine schematische Schnittansicht des Schneckengetriebes 11. Das Schneckengetriebe 11 überträgt sein Drehmoment mittels eines Kopplungselements 30 in Form einer Passfeder 31 auf den Wellenaufsatz 20, der auf die Stützwindenwelle 5 des Fahrzeuganhängers 1 aufgesetzt und mittels eines Passstifts 26 fixiert wird. Der Wellenaufsatz 20 erstreckt sich entlang der längsaxialen Richtung 82. An einem äußeren Ende 22 des Wellenaufsatzes 20 ist die Passfeder 31 in radialer Richtung 80 auf dem Wellenaufsatz 20 fixiert und in Umfangsrichtung 84 durch Formschluss in dem Wellenaufsatz 20 gehalten. Eine Kurbel 50 lässt sich auf das äußere Ende 22 des Wellenaufsatzes aufschieben, um von einem elektrischen Betrieb zu einem manuellen Betrieb zu wechseln.

Fig. 6 zeigt eine vergrößerte Darstellung eines Ausschnitts aus Fig. 5. Es ist gezeigt, dass die Passfeder 31 mittels zweier Federelemente 32 in radialer Richtung 80 mit dem Wellenaufsatz 20 gekoppelt ist. Die Passfeder 31 umfasst ein erstes Bauteil 34 und ein zweites Bauteil 38, die mittels Schrauben in radialer Richtung aneinander fixiert sind. In Umfangsrichtung 84 liegt das zweite Bauteil 38 der Passfeder 31 in einer Nut 24 des Wellenaufsatzes 20 an. Solange die Kurbel 50 nicht auf das äußere Ende 22 aufgesteckt ist, wird die Passfeder 31 durch die Federelemente 32 radial nach außen gedrückt, so dass sie in einer Nut 13 einer Getriebenabe 12 des Schneckengetriebes 11 anliegt und auf diese Weise eine mechanische Verbindung zwischen Schneckengetriebe 11 und Wellenaufsatz 20 herstellt. Das erste Bauteil 34 umfasst an seinem äußeren Ende, das gleichzeitig das äußere Ende 35 der Passfeder 31 ist, eine Rampe 36. Die rampenförmige Form sorgt dafür, dass die Passfeder 31 beim Aufstecken der Kurbel 50 nach innen gedrückt wird.

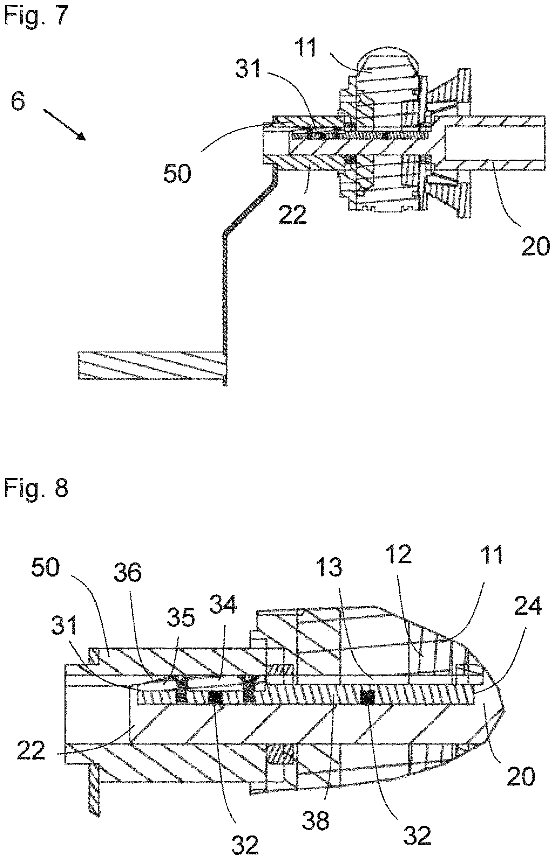

Fig. 7 und 8 zeigen die gleiche Ansicht mit aufgesteckter Kurbel 50. Durch die Kurbel 50 wird die Passfeder 31 nach innen gedrückt, so dass sich die Passfeder 31 aus der Nut 13 der Getriebenabe 12 herausbewegt und auf diese Weise die mechanische Verbindung zwischen Schneckengetriebe 11 und Wellenaufsatz 20 aufgehoben wird. Dies erlaubt es, den Stützwindenantrieb 6 manuell zu betreiben, ohne gegen die Selbsthemmung des Schneckengetriebes arbeiten zu müssen.

Fig. 9 zeigt den Wellenaufsatz 20 in schematisch vereinfachter perspektivischer Darstellung. In dieser Ansicht ist zu erkennen, wie die Passfeder 31 in der Nut 24 des Wellenaufsatzes 20 angeordnet ist. Der Wellenaufsatz 20 umfasst einen ersten zylinderförmigen Abschnitt, auf dem die Passfeder 31 angeordnet ist, und einen zweiten Abschnitt in Form eines Hohlzylinders, der die Stützwindenwelle 5 aufnimmt. Der zweite Abschnitt umfasst eine Bohrung 28, um den Wellenaufsatz mittels eines Passstifts 26 drehgesichert auf der Stützwindenwelle 5 zu montieren.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Fahrzeuganhänger
- 2: Anhängerabstützung
- 3: Stütze
- 4: Fußplatte
- 5: Stützwindenwelle
- 6: Stützwindenantrieb
- 7: Elektromotor
- 8: Gehäuse
- 9: Grundplatte
- 10: Getriebe
- 11: Schneckengetriebe
- 12: Getriebenabe
- 13: Nut
- 20: Wellenaufsatz
- 22: äußeres Ende
- 24: Nut
- 26: Passstift
- 28: Bohrung
- 30: Kopplungselement
- 31: Passfeder
- 32: Druckfeder
- 34: erstes Bauteil
- 35: äußeres Ende
- 36: Rampe
- 38: zweites Bauteil
- 40: Akkumulator
- 48: Anschluss
- 50: Kurbel
- 60: erster Unterbrecher
- 62: erster Zapfen
- 64: zweiter Unterbrecher
- 66: zweiter Zapfen
- 68: dritter Unterbrecher
- 69: dritter Zapfen
- 70: Halter
- 74: Taster
- 76: Relais
- 78: Schalter
- 80: radiale Richtung
- 82: Längsrichtung
- 84: Umfangsrichtung
- 90: Königszapfen
- 92: Kupplung
- 94: Sattelplatte

## Patentansprüche

1. Stützwindenantrieb (6) für einen Fahrzeuganhänger (1), wobei der Stützwindenantrieb (6) einen Wellenaufsatz (20), einen Elektromotor (7) und ein Getriebe (10) umfasst, wobei der Wellenaufsatz (20) dazu ausgebildet ist, drehgesichert auf eine Stützwindenwelle (5) des Fahrzeuganhängers (1) aufgesetzt zu werden, wobei das Getriebe (10) ein Drehmoment des Elektromotors (7) aufnimmt und durch eine mechanische Verbindung auf den Wellenaufsatz (20) überträgt, wobei die mechanische Verbindung zwischen dem Getriebe (10) und dem Wellenaufsatz (20) durch ein Kopplungselement (30) bereitgestellt wird, wobei das Kopplungselement (30) auf dem Wellenaufsatz (20) angeordnet und derart ausgestaltet ist, dass durch Aufstecken einer Kurbel (50) auf ein äußeres Ende (22) des Wellenaufsatzes (20) die mechanische Verbindung zwischen dem Getriebe (10) und dem Wellenaufsatz (20) unterbrochen wird, **dadurch gekennzeichnet, dass** das Kopplungselement (30) eine in radialer Richtung (80) elastisch auslenkbare Passfeder (31) ist, die auf dem Wellenaufsatz (20) angeordnet ist, wobei die Passfeder (31) durch das Aufstecken der Kurbel (50) auf den Wellenaufsatz (20) in radialer Richtung (80) nach innen bewegt wird, so dass die Passfeder (31) aus einer Nut (13) einer Getriebenabe (12) des Getriebes (10) herausbewegt wird.

2. Stützwindenantrieb (6) nach Anspruch 1, **dadurch gekennzeichnet, dass** die Passfeder (31) an ihrem äußeren Ende (35) rampenförmig ausgebildet ist.

3. Stützwindenantrieb (6) nach Anspruch 1 oder 2, **dadurch gekennzeichnet, dass** die Passfeder (31) zweiteilig ausgebildet ist, wobei ein erstes Bauteil (34) in radialer Richtung (80) auf einem zweiten Bauteil (38) fixiert ist, wobei insbesondere ein äußeres Ende des ersten Bauteils (34) rampenförmig ausgebildet ist, wobei insbesondere das zweite Bauteil (38) eine größere Längserstreckung aufweist als das erste Bauteil (34).

4. Stützwindenantrieb (6) nach einem der Ansprüche 1 bis 3, **dadurch gekennzeichnet, dass** der Elektromotor (7) und das Getriebe (10), und insbesondere der Wellenaufsatz (20), in einem gemeinsamen Gehäuse (8) angeordnet sind.

5. Stützwindenantrieb (6) nach Anspruch 4, **dadurch gekennzeichnet, dass** in dem Gehäuse (8) ein Akkumulator (40) angeordnet ist, der dazu ausgebildet ist, den Elektromotor (7) mit elektrischem Strom zu versorgen.

6. Stützwindenantrieb (6) nach Anspruch 4 oder 5 umfassend wenigstens einen mit dem Gehäuse (8) verbundenen Halter (70), der in längsaxialer Richtung (82) von dem Gehäuse (8) absteht und dazu ausgebildet ist, an dem Fahrzeuganhänger (1) gemeinsam mit einer Stützwinde oder mit zusätzlichen Bohrungen an einem Fahrzeugrahmen des Fahrzeuganhängers (1) fixiert zu werden.

7. Stützwindenantrieb (6) nach einem der Ansprüche 1 bis 6, umfassend eine Grundplatte (9), die zwischen dem Elektromotor (7) und dem Getriebe (10) angeordnet ist und an dessen Unterseite der Elektromotor (7) und an dessen Oberseite das Getriebe (10) fixiert sind, wobei insbesondere zwischen dem Elektromotor (7) und dem Getriebe (10) ein Zentrierring angeordnet ist, wobei insbesondere ein Akkumulator (40) an der Grundplatte (9) oder an einem Elektroeinschub fixiert ist.

8. Stützwindenantrieb (6) nach einem der Ansprüche 1 bis 7, umfassend wenigstens vier Relais (76), wenigstens einen Schalter (78) und einen elektrischen Anschluss (48), die auf einem gemeinsamen Elektroeinschub angeordnet sind.

9. Stützwindenantrieb (6) nach einem der Ansprüche 1 bis 8, **dadurch gekennzeichnet, dass** an einem Gehäuse (8), insbesondere an einer Rückseite des Gehäuses (8), des Stützwindenantriebs (6) ein erster Unterbrecher (60) mit einem ersten Zapfen (62) derart angeordnet ist, dass der erste Zapfen (62) beim Einfahren einer Stütze (3) durch eine Fußplatte (4) der Stütze eingedrückt wird, wenn der Stützwindenantrieb (6) an der Stütze (3) fixiert ist und die Fußplatte (4) einen oberen Haltepunkt erreicht hat, wobei der erste Unterbrecher (60) dazu ausgebildet ist, eine Stromversorgung des Elektromotors (7) zu unterbrechen, wenn der erste Zapfen (62) eingedrückt ist.

10. Anhängerabstützung (2) für einen Fahrzeuganhänger (1), umfassend wenigstens eine Stützwindenwelle (5), wenigstens eine Stütze (3) und einen Stützwindenantrieb (6) nach einem der Ansprüche 1 bis 9.

11. Anhängerabstützung (2) nach Anspruch 10 umfassend einen zweiten Unterbrecher (64) mit einem zweiten Zapfen (66), wobei der zweite Unterbrecher (64) an einer Fußplatte (4) der Stütze (3) fixiert ist, so dass der zweite Zapfen (66) eingedrückt wird, wenn die Unterseite der Fußplatte (4) auf einem Untergrund aufliegt, wobei der zweite Unterbrecher (64) dazu ausgebildet ist, eine Stromversorgung des Elektromotors (7) zu unterbrechen, wenn der zweite Zapfen (66) eingedrückt ist, wobei insbesondere an einem Gehäuse (8) des Stützwindenantriebs (6) ein Betätigungselement, insbesondere ein Taster (74), angeordnet ist, wobei das Betätigungselement während es betätigt wird die Stromversorgung des Elektromotors (7) trotz eingedrücktem zweiten Zapfen (66) wiederherstellt.

12. Fahrzeuganhänger (1), umfassend eine Anhängerabstützung (2) nach Anspruch 10 oder 11.

13. Fahrzeuganhänger (1) nach Anspruch 12 umfassend einen dritten Unterbrecher (68) mit einem dritten Zapfen (69), wobei der dritte Unterbrecher (68) in Fahrtrichtung des Fahrzeuganhängers (1) vor einem Königszapfen (90) des Fahrzeuganhängers (10) fixiert ist, so dass der dritte Zapfen (69) eingedrückt ist, solange der Königszapfen (90) in einer Kupplung (92) einer Sattelplatte einer Zugmaschine eingekuppelt ist, wobei der dritte Unterbrecher (68) dazu ausgebildet ist, eine Stromversorgung des Elektromotors (7) zu unterbrechen, wenn der dritte Zapfen (69) nicht eingedrückt ist.

## Claims

1. A supporting leg drive (6) for a vehicle trailer (1), wherein the supporting leg drive (6) comprises a shaft attachment (20), an electric motor (7), and a transmission (10), wherein the shaft attachment (20) is designed to be fitted in a rotationally fixed manner on a supporting leg shaft (5) of the vehicle trailer (1), wherein the transmission (10) receives a torque of the electric motor (7) and transmits said torque to the shaft attachment (20) by means of a mechanical connection, wherein the mechanical connection between the transmission (10) and the shaft attachment (20) is provided by means of a coupling element (30), wherein the coupling element (30) is arranged on the shaft attachment (20) and is designed such that the mechanical connection between the transmission (10) and the shaft attachment (20) is interrupted by attaching a crank (50) on an outer end (22) of the shaft attachment (20), **characterized in that** the coupling element (30) is a feather key (31) which is elastically deflectable in the radial direction (80) and which is arranged on the shaft attachment (20), wherein the feather key (31) is moved inwards in the radial direction (80) by attaching the crank (50) on the shaft attachment (20), such that the feather key (31) is moved out of a groove (13) of a transmission hub (12) of the transmission (10).

2. The supporting leg drive (6) according to claim 1, **characterized in that** the feather key (31) is ramp-shaped at its outer end (35).

3. The supporting leg drive (6) according to claim 1 or 2, **characterized in that** the feather key (31) is formed of two parts, wherein a first component (34) is fxied in the radial direction (80) on a second component (38), wherein in particular an outer end of the first component (34) is ramp-shaped, wherein in particular the second component (38) has a greater longitudinal extent than the first component (34).

4. The supporting leg drive (6) according to any one of claims 1 to 3, **characterized in that** the electric motor (7) and the transmission (10), and in particular the shaft attachment (20), are arranged in a common housing (8).

5. The supporting leg drive (6) according to claim 4, **characterized in that** an accumulator (40) is arranged in the housing (8), wherein the accumulator (40) is designed to supply the electric motor (7) with electrical power.

6. The supporting leg drive (6) according to claim 4 or 5, comprising at least one holder (70) which is connected to the housing (8) and which protrudes from the housing (8) in the longitudinal-axial direction (82) and which is designed to be secured to the vehicle trailer (1) together with a supporting leg or by means of additional bores to a vehicle frame of the vehicle trailer (1).

7. The supporting leg drive (6) according to any one of claims 1 to 6, comprising a base plate (9) which is arranged between the electric motor (7) and the transmission (10), and the electric motor (7) is secured to the bottom side of said base plate (9) and the transmission (10) is secured to the top side of said base plate (9), wherein in particular a centering ring is arranged between the electric motor (7) and the transmission (10), wherein in particular an accumulator (40) is secured to the base plate (9) or to an electric slide-in unit.

8. The supporting leg drive (6) according to any one of claims 1 to 7, comprising at least four relays (76), at least one switch (78), and an electric connection (48), which are arranged on a common electric slide-in unit.

9. The supporting leg drive (6) according to any one of claims 1 to 8, **characterized in that** a first interrupter (60) having a first pin (62) is arranged on a housing (8), in particular on a rear side of the housing (8), of the supporting leg drive (6) such that the first pin (62) is pressed in by a footplate (4) of a support (3) when the support is moved in and when the supporting leg drive (6) is secured to the support (3) and the footplate (4) has reached an upper holding point, wherein the first interrupter (60) is designed to interrupt a power supply of the electric motor (7) when the first pin (62) is pressed in.

10. A trailer support (2) for a vehicle trailer (1), comprising at least one supporting leg shaft (5), at least one support (3), and a supporting leg drive (6) according to any one of claims 1 to 9.

11. The trailer support (2) according to claim 10, comprising a second interrupter (64) having a second pin (66), wherein the second interrupter (64) is secured to a footplate (4) of the support (3), such that the second pin (66) is pressed in when the bottom side of the footplate (4) is resting on a surface, wherein the second interrupter (64) is designed to interrupt a power supply of the electric motor (7) when the second pin (66) is pressed in, wherein in particular an actuation element, in particular a button (74), is arranged on a housing (8) of the supporting leg drive (6), wherein the actuation element, while being actuated, restores the power supply of the electric motor (7) in spite of the second pin (66) being pressed in.

12. A vehicle trailer (1), comprising a trailer support (2) according to claim 10 or 11.

13. The vehicle trailer (1) according to claim 12, comprising a third interrupter (68) having a third pin (69), wherein the third interrupter (68) is secured in front of a kingpin (90) of the vehicle trailer (10) in the travel direction of the vehicle trailer (1), such that the third pin (69) is pressed in as long as the kingpin (90) is engaged in a coupling (92) of a fifth wheel plate of a tractor, wherein the third interrupter (68) is designed to interrupt a power supply of the electric motor (7) when the third pin (69) is not pressed in.

## Revendications

1. Entraînement (6) de pied d'appui pour une remorque de véhicule (1), l'entraînement (6) de pied d'appui comprenant un embout d'arbre (20), un moteur électrique (7) et une transmission (10), l'embout d'arbre (20) étant conçu pour être placé de manière bloquée en rotation sur un arbre (5) de pied d'appui de la remorque de véhicule (1), la transmission (10) recevant un couple de rotation provenant du moteur électrique (7) et le transmettant par une liaison mécanique à l'embout d'arbre (20), la liaison mécanique entre la transmission (10) et l'embout d'arbre (20) étant assurée par un élément de accouplement (30), l'élément de accouplement (30) étant agencé sur l'embout d'arbre (20) et étant configuré de telle sorte que la liaison mécanique entre la transmission (10) et l'embout d'arbre (20) est interrompue par l'insertion d'une manivelle (50) sur une extrémité extérieure (22) de l'embout d'arbre (20), **caractérisé en ce que** l'élément d'accouplement (30) est une clavette (31) apte à être déviée élastiquement dans la direction radiale (80), qui est agencée sur l'embout d'arbre (20), la clavette (31) étant déplacée vers l'intérieur dans la direction radiale (80) par l'insertion de la manivelle (50) sur l'embout d'arbre (20), de sorte que la clavette (31) soit déplacée hors d'une rainure (13) d'un moyeu (12) de transmission de la transmission (10).

2. Entraînement (6) de pied d'appui selon la revendication 1, **caractérisé en ce que** la clavette (31) est réalisée en forme de rampe à son extrémité extérieure (35).

3. Entraînement (6) de pied d'appui selon la revendication 1 ou la revendication 2, **caractérisé en ce que** la clavette (31) est réalisée en deux parties, un premier composant (34) étant fixé dans la direction radiale (80) sur un deuxième composant (38), une extrémité extérieure du premier composant (34) étant notamment réalisée en forme de rampe, le deuxième composant (38) présentant notamment une extension longitudinale plus grande que le premier composant (34).

4. Entraînement (6) de pied d'appui selon l'une des revendications 1 à 3, **caractérisé en ce que** le moteur électrique (7) et le réducteur (10), et en particulier l'embout d'arbre (20), sont agencés dans un boîtier commun (8).

5. Entraînement (6) de pied d'appui selon la revendication 4, **caractérisé en ce qu'**un accumulateur (40) est agencé dans le boîtier (8), lequel est conçu pour alimenter le moteur électrique (7) en courant électrique.

6. Entraînement (6) de pied d'appui selon la revendication 4 ou la revendication 5, comprenant au moins un support (70) relié au boîtier (8), qui fait saillie du boîtier (8) dans la direction axiale longitudinale (82) et qui est conçu pour être fixé sur la remorque de véhicule (1) conjointement avec un pied d'appui ou avec des trous supplémentaires sur un châssis de véhicule de la remorque de véhicule (1).

7. Entraînement (6) de pied d'appui selon l'une des revendications 1 à 6, comprenant une plaque de base (9) qui est agencée entre le moteur électrique (7) et la transmission (10) et sur la face inférieure de laquelle sont fixés le moteur électrique (7) et sur la face supérieure de laquelle est fixée la transmission (10), une bague de centrage étant notamment agencée entre le moteur électrique (7) et la transmission (10), un accumulateur (40) étant notamment fixé sur la plaque de base (9) ou sur un tiroir électrique.

8. Entraînement (6) de pied d'appui selon l'une des revendications 1 à 7, comprenant au moins quatre relais (76), au moins un interrupteur (78) et un raccordement électrique (48), qui sont agencés sur un tiroir électrique commun.

9. Entraînement (6) de pied d'appui selon l'une des revendications 1 à 8, **caractérisé en ce qu'**un premier interrupteur (60) avec un premier pion (62) est agencé sur un boîtier (8), en particulier sur une face arrière du boîtier (8), de l'entraînement (6) de pied d'appui, de telle sorte que le premier pion (62) soit enfoncé par une semelle (4) du pied d'appui lors de la rentrée d'un pied (3), lorsque l'entraînement (6) de pied d'appui est fixé au pied d'appui (3) et que la semelle (4) a atteint un point d'arrêt supérieur, le premier interrupteur (60) étant conçu de façon à interrompre une alimentation électrique du moteur électrique (7) lorsque le premier pion (62) est enfoncé.

10. Support de remorque (2) pour une remorque de véhicule (1), comprenant au moins un arbre (5) de pied d'appui, au moins un pied d'appui (3) et un entraînement (6) de pied d'appui selon l'une des revendications 1 à 9.

11. Support de remorque (2) selon la revendication 10 comprenant un deuxième interrupteur (64) avec un deuxième pion (66), le deuxième interrupteur (64) étant fixé à une semelle (4) du support (3) de sorte que le deuxième pion (66) est enfoncé lorsque la face inférieure de la semelle (4) repose sur un sol, le deuxième interrupteur (64) étant conçu de façon à interrompre une alimentation en courant du moteur électrique (7) lorsque le deuxième pion (66) est enfoncé, un élément d'actionnement, en particulier un boutonpoussoir (74), étant agencé en particulier sur un boîtier (8) de l'entraînement (6) de pied d'appui, l'élément d'actionnement rétablissant l'alimentation en courant du moteur électrique (7) pendant qu'il est actionné, malgré l'enfoncement du deuxième tenon (66).

12. Remorque de véhicule (1), comprenant un support de remorque (2) selon la revendication 10 ou la revendication 11.

13. Remorque de véhicule (1) selon la revendication 12, comprenant un troisième interrupteur (68) avec un troisième pion (69), le troisième interrupteur (68) étant fixé en avant d'un pivot d'attelage (90) de la remorque de véhicule (10) dans le sens de déplacement de la remorque de véhicule (1), de sorte que le troisième pion (69) est enfoncé, tant que le pivot d'attelage (90) est relié à un accouplement (92) d'une plaque d'attelage d'un tracteur, le troisième interrupteur (68) étant conçu de façon à interrompre une alimentation électrique du moteur électrique (7) lorsque le troisième pion (69) n'est pas enfoncé.
